# EUROPEAN PATENT SPECIFICATION

(11) **EP 3 216 277 B1**
(45) Date of publication and mention of the grant of the patent: **12.02.2020**
(21) Application number: 15794240.0
(22) Date of filing: 03.11.2015
(51) Int. Cl.: H04W 52/02

(54) **ENERGY HARVESTING IN A WIRELESS COMMUNICATION NETWORK**
ENERGIEGEWINNUNG IN EINEM DRAHTLOSKOMMUNIKATIONSNETZWERK
RÉCUPÉRATION D'ÉNERGIE DANS UN RÉSEAU DE COMMUNICATION SANS FIL

(30) Priority: 04.11.2014 GB 201419668
(43) Date of publication of application: 13.09.2017
(73) Proprietor: University of Surrey, Surrey GU2 7XH (GB)
(72) Inventor: CHEN, Gaojie, Guildford Surrey GU2 7XH (GB); LI, Bing, Xi'an Shaanxi 710100 (CN); KELLY, James, Guildford Surrey GU2 7XH (GB); XIAO, Pei, Guildford Surrey GU2 7XH (GB); TAFAZOLLI, Rahim, Guildford Surrey GU2 7XH (GB)
(74) Representative: Cork, Robert
(86) International application number: PCT/GB2015/053310
(87) International publication number: WO 2016/071686

(56) References cited:
- WO-A1-2010/030767
- US-A1- 2011 260 839
- US-A1- 2013 035 046
- NG DERRICK WING KWAN ET AL: "Robust Beamforming for Secure Communication in Systems With Wireless Information and Power Transfer", IEEE TRANSACTIONS ON WIRELESS COMMUNICATIONS, IEEE SERVICE CENTER, PISCATAWAY, NJ, US, vol. 13, no. 8, 1 August 2014 (2014-08-01) , pages 4599-4615, XP011555849, ISSN: 1536-1276, DOI: 10.1109/TWC.2014.2314654 [retrieved on 2014-08-08]

## Description

### Technical Field

The present invention relates to energy harvesting in wireless communication networks. More particularly, the present invention relates to harvesting electrical energy at a device from a wireless self-signal transmitted by the same device. In some embodiments, energy may also be harvested from the signals transmitted by other devices within surrounding areas, which can be referred to as co-operative energy harvesting.

### Background of the Invention

Recently, energy harvesting has been proposed as a technique for green communications and for extending the battery life of electronic devices by extracting energy from external sources. In wireless communication networks, there has been interest in using energy harvesting to achieve power savings and prolong the lifetime of energy constrained wireless devices, such as mobile phone handsets and wearable electronic devices. However, in conventional energy harvesting methods, the path-loss is very large, limiting the amount of energy that can be extracted. For example, when the distance between a hybrid access point (base station that transfers both information and power) and a mobile device is 1 metre, the path-loss for a 2.45 gigahertz (GHz) signal is almost 42 decibels (dB). Assuming that the hybrid access point has a transmission power of 20 decibel-milliwatts (dBm), the input power received by the mobile device will be -20 dBm. For this reason, unless the devices are very close or the power level of the transmitter is very high, the harvested energy will be negligible for conventional energy harvesting.

US 2013/035046 A1 discloses a wireless communication apparatus including at least one two-way antenna for power recovery, and a power recovery block recovering electric power from a received signal of the two-way antenna for power recovery.

The invention is made in this context.

### Summary of the Invention

According to the present invention, there is provided apparatus for transmitting and receiving signals in a wireless communication network according to claim 1. The term "self-signal" is used herein to refer to the portion of a signal transmitted by a device that is received by the receive antenna in the same device.

In some embodiments, the transmit antenna and the receive antenna can be the same physical antenna, and the apparatus can further comprise a coupling mechanism configured to separate signals received and transmitted via said antenna. The coupling mechanism may, for example, be a directional coupler, circulator, hybrid junction, divider, gyrator, or any other suitable mechanism. The coupling mechanism may be configurable to allow the ratio of the power of the self-signal to the power of the transmitted signal to be dynamically adjusted. This configurable coupling component can be configured to optimise the trade-off between energy harvesting and signal transmission.

In some embodiments, the energy harvesting unit is further configured to harvest electrical energy from one or more other devices, in addition to harvesting electrical energy from the self-signal. The term "co-operative signal" is used herein to refer to the portion of the signal transmitted by other sources within the surrounding area and received at the receive antenna or via another mechanism (e.g. circulator, divider, power splitter, etc.). Examples of other device from which a co-operative signal may be received include, but are not limited to, a base station, WiFi access point, and relay station.

The apparatus can further comprise: a power splitter configured to receive an input signal from the receive antenna and split the received signal into first and second output signals; and an information receiver configured to receive the first output signal from the power splitter and to process the first output signal to extract information, wherein the energy harvesting unit can be configured to receive the second output signal from the power splitter and harvest the electrical energy from the second output signal.

The apparatus can further comprise a power splitter controller configured to control the power splitter to adjust a ratio of signal powers between the first and second output signals. The first and second output signals can be referred to respectively as the information signal and the harvested signal.

The power splitter controller could be configured to adjust the ratio of the power of the information signal compared to the harvested signal. It this way it will be possible to provide a target power level of the second output signal to the energy harvesting unit, wherein the target power level of the second output signal is a power level corresponding to an optimum operating efficiency of the energy harvesting unit.

When co-operative energy harvesting is also performed, the co-operative signal is also received at the first frequency.

The apparatus may further comprise an impedance matching mechanism controllable to match the output impedance of the receive antenna and/or power splitter to the input impedance of the energy harvesting unit. In some embodiments, the impedance matching mechanism can be configured to perform impedance matching in accordance with the input power level at the energy harvesting unit, to achieve optimum energy transfer at different input power levels.

In some embodiments, the apparatus is included in a mobile device, wearable device, wrist watch, sensor node, internet of things (IoT) node, etc. for use in the wireless communication network. In other embodiments, the apparatus is included in a wireless access point (e.g. WiFi hub, cellular network base station) configured to communicate with a plurality of devices in the wireless communication network.

The apparatus may further comprise energy storage means for storing energy, and the energy harvesting unit can be configured to store the harvested electrical energy in the energy storage means.

According to the present invention, there is also provided a method of harvesting energy at an apparatus in a wireless communication network according to claim 7.

The method may further comprise: dividing an input signal from the receive antenna into first and second output signals; and sending the first output signal to an information receiver configured to process the first output signal to extract information, wherein the electrical energy is harvested from the second output signal.

The method may further comprise adjusting a ratio of signal powers between the first and second output signals to provide a target power level of the second output signal, wherein the target power level of the second output signal is a power level corresponding to an optimum operating efficiency of an energy harvesting unit used to harvest the electrical energy.

### Brief Description of the Drawings

Embodiments of the present invention will now be described, by way of example only, with reference to the accompanying drawings, in which:
Figure 1 illustrates a wireless communications network according to an embodiment of the present invention;
Figure 2 illustrates apparatus for harvesting energy from a self-signal (SS) and a co-operative signal (CS) at a device or wireless access point in a mobile communication network, according to an embodiment of the present invention;
Figure 3 illustrates the principle for information transfer and energy harvesting in a Frequency Division Duplexing system, according to an embodiment of the present invention;
Figure 4 illustrates the principle for information transfer and energy harvesting in a Time Division Duplexing system, according to an embodiment of the present invention;
Figure 5 illustrates the principle for information transfer and energy harvesting in a Full Duplexing system, according to an embodiment of the present invention;
Figure 6 is a flowchart illustrating a method of harvesting energy in a wireless communication network, according to an embodiment of the present invention;
Figure 7 illustrates apparatus for harvesting energy from a self-signal (SS) and a co-operative signal (CS) at a device in a Frequency Division Duplexing mobile communication network, according to an embodiment of the present invention;
Figure 8 illustrates apparatus for harvesting energy from a self-signal (SS) and a co-operative signal (CS) at a device in a Full Duplexing mobile communication network, according to an embodiment of the present invention;
Figure 9 illustrates apparatus for harvesting energy from a self-signal (SS) and a co-operative signal (CS) at a device in a Time Division Duplexing mobile communication network, according to an embodiment of the present invention;
Figure 10 illustrates the energy harvesting efficiency of a first rectifier, according to an embodiment of the present invention; and
Figure 11 illustrates the energy harvesting efficiency of a second rectifier, according to an embodiment of the present invention.

### Detailed Description

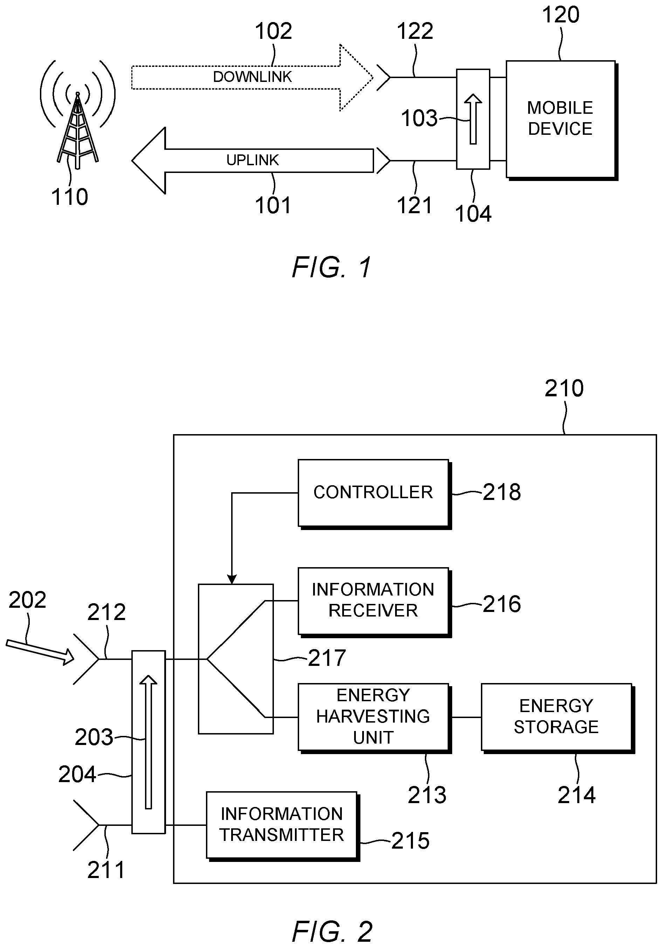

Referring now to Fig. 1, a wireless communications network is illustrated according to an embodiment of the present invention. The wireless communications network includes a wireless access point 110 and a mobile device 120, which are configured to communicate wirelessly with one another. The wireless access point 110 and the mobile device 120 each include one or more transmit antennas and one or more receive antennas. The wireless access point 110 can be any type of access point, such as a base station, a WiFi access point or a relay station, etc. and is configured to communicate with a plurality of devices in the wireless communication network. The mobile device 120 can be any device capable of communicating with the wireless access point 110, for example a mobile phone handset such as a smartphone, a laptop or tablet computer, a wearable electronic device such as a smart watch, a wireless sensor or Internet of Things devices. Alternatively, or in addition, self-interference energy harvesting could be performed within an access point itself.

As shown in Fig. 1, an uplink signal 101 is transmitted to the wireless access point 110 from a transmit antenna 121 of the mobile device 120, and a downlink signal 102 is received from the wireless access point 110 at a receive antenna 122 of the mobile device 120. In addition, when an uplink signal 101 is transmitted by the transmit antenna 121, the receive antenna 122 is arranged to receive a finite portion 103 of the transmitted signal power via a leakage path from the transmit antenna 121, since the transmit antenna 121 and receive antenna 122 cannot be perfectly isolated.

Alternatively, or in addition, a coupling component 104 could be used to couple the self-signal from transmit antenna 121 to receive antenna 122 or the receive port of the device. For example, a coupling component 104 can be provided when the same physical antenna is used as both the transmit and receive antennas. In such embodiments, the coupling component 104 can be configured to separate signals transmitted and received via the same antenna. The coupling component 104 can be any device capable of splitting a signal between two or more output ports, such as a directional coupler, circulator, hybrid junction, divider, gyrator, or any other suitable mechanism. The splitting radio could be fixed or dynamically reconfigurable. In the case that the coupler is dynamically reconfigurable it will be possible to adjust the power of the self-signal (whether received at the receive antenna or via another mechanism, e.g. directional coupler, circulator, hybrid junctions, dividers, gyrators, etc.) compared to the transmitted signal. In this way it would be possible to optimise the ratio of these signal powers in order to achieve the best trade-off between energy harvesting and signal transmission.

The signal power leaked from the transmit antenna 121 to the receive antenna 122 is hereinafter referred to as the self-signal (SS) 103. The self-signal is the signal that is received via a leakage path between the transmit and receive antennas in the same device, and may also be referred to as a self-transmitted signal. In conventional Full-Duplex systems this signal is referred to as "self-interference" (SI). Although Fig. 1 illustrates the self-signal within the mobile device 120, a self-signal will also exist within numerous other wireless devices, including but not limited to: a wearable device, wrist watch, sensor node, internet of things (IoT) node, base station, and WiFi hub. The invention is equally applicable to use within any of these types of device.

In embodiments of the present invention, a device in a wireless communication network is configured to harvest electrical energy from SS between a transmit antenna and a receive antenna of the device. In some embodiments, the device can also be configured to harvest energy from a co-operative signal (CS) transmitted by one or more other devices in the surrounding area. The signal loss for the SS signal is low since the transmit antenna and the receive antenna are closely spaced on the same device, and hence a relatively high amount of power can be extracted from the self-signal via energy harvesting.

Referring now to Fig. 2, apparatus for harvesting energy from SS and CS at a device in a mobile communication network is illustrated, according to an embodiment of the present invention. The apparatus can, for example, be included in a mobile device or a wireless access point such as those described above with reference to Fig. 1.

As shown in Fig. 2, the apparatus 210 comprises a transmit antenna 211 configured to transmit signals to the wireless communication network, a receive antenna 212 configured to receive signals from the wireless communication network, and an energy harvesting unit 213 configured to harvest electrical energy from the self-signal 203 received at the receive antenna 212 while a signal is being transmitted by the transmit antenna 211. A co-operative signal 202 may be received from other devices at a receive antenna 212 of the apparatus 210. Alternatively, or in addition, a coupling component 204 may be provided to couple the self-signal 203 from transmit antenna 211 to receive antenna 212 or the receive port of the device. This coupler could have a fixed power splitting ratio or a reconfigurable splitting ratio. In addition to harvesting electrical energy from the self-signal 203, the harvesting unit 213 can be configured to harvest the electrical energy from the co-operative signal 202 in the wireless communication network.

The apparatus also comprises an information transmitter 215 configured to transmit information over the wireless communication network via the transmit antenna 211, and an information receiver 216 configured to process a signal received via the receive antenna 212 in order to extract information.

In the present embodiment the apparatus further comprises energy storage means 214 for storing energy harvested by the energy harvesting unit. The energy storage means 214 may be any suitable energy storage unit, such as a lithium battery. However, in other embodiments the harvested energy could be stored at a remote location, instead of being stored in an energy storage unit local to the device at which the energy is harvested. Furthermore, in some embodiments a device may be configured to directly consume the harvested energy as it is generated, without storing the harvested energy.

Additionally, in the present embodiment the apparatus 210 comprises means 217 for splitting an input signal received by the receive antenna 212 into two first and second output signals. The first output signal is sent to the information receiver 216, which processes the first output signal to extract information. The second output signal is sent to the energy harvesting unit 213, which harvests electrical energy from the second output signal. In this way, the apparatus 210 can continue to receive information from the wireless communication network via the receive antenna 212 at the same time as energy is being harvested by the energy harvesting unit 213. Therefore the energy harvesting process does not interfere with normal operation of the device in which the apparatus 210 is included.

In some embodiments, the signal splitting means 217 is a power divider configured to divide the received signal power across two output signal paths. The power divider could be configured to always provide a fixed ratio of signal powers between the two output paths. Preferably, the power divider 217 can be reconfigurable enabling the ratio of signal powers between the first and second output signals to be adjusted dynamically. In this case the apparatus 210 could further comprise a controller 218 configured to control the power divider 217 to adjust the ratio of signal powers between the first and second output signals. By using a variable power divider, the proportion of received signal power used for energy harvesting can be adapted according to current conditions, to ensure that the information receiver 218 always receives sufficient signal power to be able to decode the received signal.

In addition, the controller 218 can be configured to adjust the ratio of signal powers to provide a target power level to the energy harvesting unit 213. The target power level of the second output signal is a power level corresponding to an optimum operating efficiency of the energy harvesting unit, thereby ensuring that the energy harvesting unit is continuously operated at peak efficiency.

Additionally, to further enhance the power transfer efficiency of the energy harvesting system the input matching between the various stages of the system can be dynamically adjusted. Embodiments of the invention may further comprise an impedance matching mechanism controllable to match the output impedance of the receive antenna and/or power splitter to the input impedance of the energy harvesting unit. This impedance matching operation may take account the input power level at the energy harvesting unit. The input power level controls the input impedance of the rectifier (according to the I/V curve of the diodes (or other such rectifying element). For this reason the rectifier's impedance is a function of the input power level. By dynamically adjusting the matching in accordance with the input power level at the energy harvesting unit, optimum power transfer at all power levels can be achieved.

Although in the present embodiment the signal splitting means 217 is a power divider, other types of signal splitting means may be used in other embodiments of the present invention. For example, in some embodiments the apparatus may be configured to operate in a Frequency Division Duplexing (FDD) mode in which the transmit antenna is configured to transmit signals at a first frequency (f₁), and the receive antenna is configured to receive signals at a second frequency (f2) different to the first frequency. In such embodiments, the signal splitting means 217 can be a filter configured to receive the input signal from the receive antenna and separate the input signal into a first filtered signal with a frequency equal to f₁ and a second filtered signal with a frequency equal to f₂. Since the SS is transmitted at f₁ and the wanted signal to be sent to the information receiver is received at f₂, the SS will be contained in the first filtered signal. Therefore the energy harvesting unit can be configured to receive the first filtered signal from the filter and harvest the electrical energy from the first filtered signal.

Furthermore, in other embodiments the signal splitting means 217 may be omitted entirely. For example, in some embodiments the apparatus is configured to operate in a Time Division Duplexing (TDD) mode, in which the device alternately switches between transmission-only and reception-only modes. In a conventional TDD device the receive antenna is deactivated while the device is transmitting a signal. However, in TDD embodiments of the present invention, the apparatus can be configured to activate the receive antenna while a signal is being transmitted by the transmit antenna, in order to receive the self-signal and co-operative signal at the receive antenna. During this time, the energy harvesting unit can be activated in order to harvest energy from the SS and CS, and the information receiver can be deactivated. When the device is switched back into the reception mode, the information receiver can be activated to begin decoding a received signal. In such embodiments, a suitable switching mechanism could be used to switch the output of the receive antenna between the energy harvesting unit and the information receiver, according to whether the device is currently in the transmission mode or the reception mode.

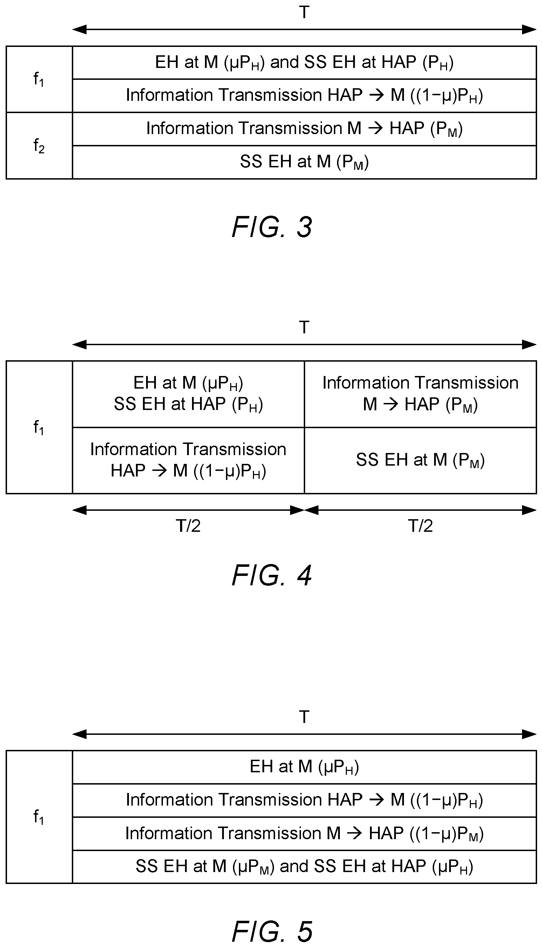

The power available for energy harvesting when using FDD, TDD and Full Duplex (FD) communication schemes will now be described by reference to Figs. 3 to 5. In Figs. 3 to 5, T denotes the time period within which a certain block of information are transmitted from a hybrid access point (HAP) to a mobile device (M) or vice versa, µ (o < µ < 1) denotes the power splitting ratio between the energy harvesting and information transfer signal paths, and P_{H} and P_{M} denote the total received signal power from the access point and the mobile device, respectively.

Figure 3 illustrates an FDD embodiment of the invention, in which a first frequency f₁ is used for downlink transmission (access point to mobile device), and a second frequency f₂ is used for uplink transmission (mobile device to access point). The mobile device can perform energy harvesting using a fraction of the signal power received from the access point (µP_{H} at the downlink frequency f₁, and can perform SI energy harvesting using the total transmitted power P_{M} at the uplink frequency f2. Similarly, the access point can perform energy harvesting using a fraction of the signal power received from the mobile device (µP_{M}) at the uplink frequency f2, and can perform SI energy harvesting using the total transmitted power P_{H} at the downlink frequency f₁.

Figure 4 illustrates power available for energy harvesting in a Time Division Duplexing system, according to an embodiment of the present invention. In a TDD system, a mobile device or access point will only receive its own transmitted signals as SS when the device is in transmission mode. As shown in Fig. 4, the mobile device and access point can both harvest energy from signals received from other devices, for example by using a power divider to divert a fraction (µ) of the received power to the energy harvesting unit while the device is in reception mode. Therefore in a reception mode, the power available for energy harvesting at the mobile device is given by µP_{H} and the power available for energy harvesting at the access point is given by µP_{M}. In the transmission mode, the power available for SS energy harvesting at the mobile device is given by P_{M}, and the power available for SS energy harvesting at the access point is given by P_{H}.

Figure 5 illustrates the principle for information transfer and energy harvesting in a Full Duplexing system, according to an embodiment of the present invention. In a full duplex system, a power splitter can be used to divert a fraction (µ) of the received power to the energy harvesting unit. At the mobile device, µP_{H} is available for energy harvesting, for example to recharge the mobile device's internal battery. Similarly, µP_{M} is available for energy harvesting at the access point. SS/SI on the remaining signal with power equal to (1-µ)P_{M} at the access point, and (1-µ)P_{H} at the mobile device, must be cancelled in order to ensure correct full duplex operation. Methods for cancelling SS/SI in full duplex systems are known in the art, and will not be described in detail here.

As shown in Figs. 3 to 5, harvesting energy from SS increases the total amount of energy that can be harvested in a wireless communication network, in comparison to conventional methods in which only the signal power received from other device(s) is used for energy harvesting. That is, any SS-related terms shown in Figs. 3 to 5 represent additional useful power that can be harvested in comparison to existing methods.

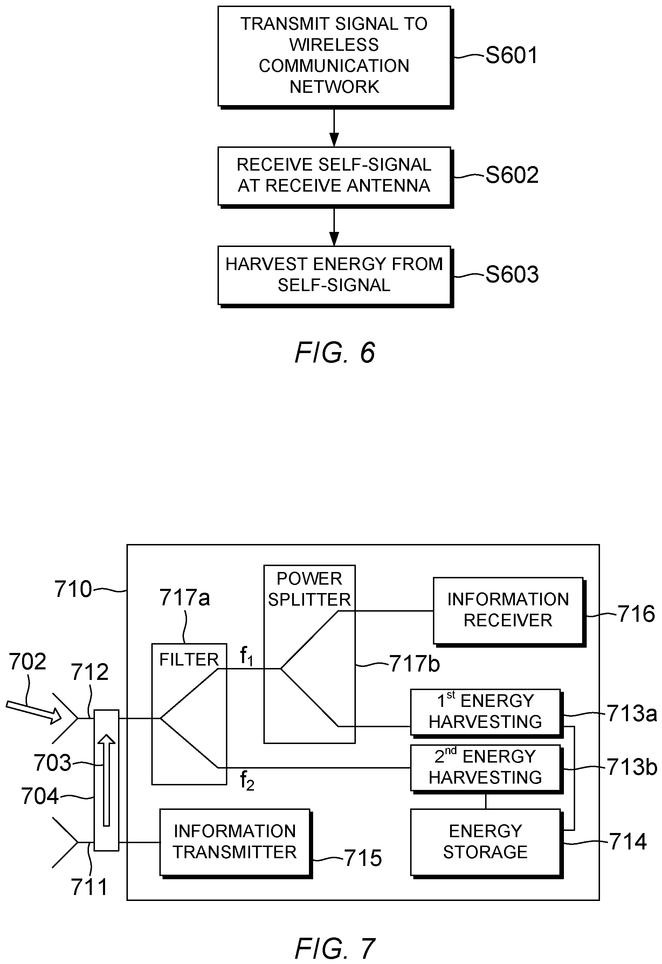

Referring now to Fig. 6, a method of harvesting energy in a wireless communication network is illustrated, according to an embodiment of the present invention. The method can be performed at any device in a wireless communication network, for example a mobile device or an access point. First, in step S601 the device transmits a signal over the wireless communication network. Then, in step S602 the device receives self-signal at the receive antenna while the signal is being transmitted by the transmit antenna. It should be recognised that steps S601 and S602 are performed substantially concurrently, since there will only be a negligible delay between the start of transmission in step S601 and the SI reaching the receive antenna in step S602. Then, in step S603 electrical energy is harvested from the received self-signal.

As explained above, a SS will be received at significantly higher power than a signal received from another device in the wireless communication network (i.e. via conventional energy harvesting). As such, utilising the SS for energy harvesting, as shown in Fig. 3, can significantly increase the amount of power that can be recovered by energy harvesting. For example, a conventional energy harvesting method using only power received from another device can only extend a battery lifetime in a mobile device by a very small percentage, typically less than 0.1 % of the total battery life. In contrast, performing energy harvesting using SS has the potential to increase the battery life much more significantly. For example, when a method, such as the one shown in Fig. 6, is applied to existing mobile devices, improvements in battery life of at least 0.7% are expected for a 6.9 Watt hour (Wh) capacity battery with a normal operating life of around 14hours. For another example, when a method such as the one shown in Fig. 6 is applied to a cellular network base station, more than 0.52 W energy harvesting are expected for a transmit power of 40 W.

Referring now to Fig. 7, apparatus for harvesting energy from SS 703 and CS 702 at a device in a Frequency Division Duplexing (FDD) mobile communication network is illustrated, according to an embodiment of the present invention. In the present embodiment the apparatus is embodied in a mobile device, but in other embodiments the apparatus may be embodied in an access point (e.g. cellular network base station or WiFi hub) or other device.

The apparatus 710 includes many similar elements to the apparatus illustrated in Fig. 2, and a detailed description will not be repeated here. For example, the apparatus 710 comprises a transmit antenna 711, receive antenna 712, coupling component 704 which could be fixed or reconfigurable, energy harvesting unit 713, energy storage unit 714, information transmitter 715, and an information receiver 716, similar to those described above with reference to Fig. 2. In the present embodiment, the apparatus 710 also includes two-stage signal splitting means in the form of a filter 717a and a power splitter 717b. The filter 717a is configured to separate a signal from the receive antenna 712 into separate signals at frequencies f₁ and f₂. The self-signal 703 and co-operative signal 702 at the uplink frequency f₂ are sent directly to the energy harvesting unit 713, and the wanted signal at the downlink frequency f₁ is sent to the power splitter 717b. The power splitter 717b operates in a similar manner to the one shown in Fig. 2, and splits the signal at frequency f₁ into two reduced-power signals. In the mobile device, the reduced-power signal with power (1-µ)P_{H} at frequency f₂ is used to recover information sent by the access point, and the remaining fraction µP_{H} of the signal power at frequency f₁ is used for energy harvesting, in addition to the full SI power P_{M} at frequency f₂.

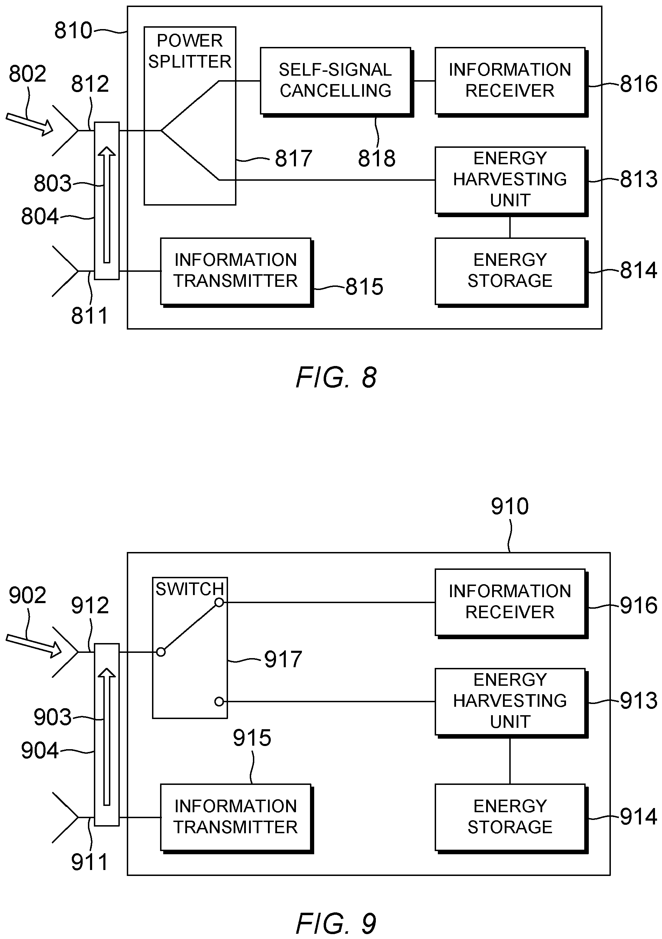

Referring now to Fig. 8, apparatus for harvesting energy from SS 803 and CS 802 at a device in a Full Duplexing (FD) mobile communication network is illustrated, according to an embodiment of the present invention. In the present embodiment the apparatus is embodied in a mobile device, but in other embodiments the apparatus may be embodied in an access point or other device.

The apparatus 810 includes many similar elements to the apparatus illustrated in Figs. 2 and 7, and a detailed description will not be repeated here. For example, the apparatus 810 comprises a transmit antenna 811, receive antenna 812, coupling component 804 which could be fixed or reconfigurable, energy harvesting unit 813, energy storage unit 814, information transmitter 815, an information receiver 816, and a power splitter 817. In addition, since the apparatus operates in the FD mode, a signal cancelling unit 818 is provided to ensure that the information receiver is not affected by self-interference caused by the self-transmitted signal 803 and co-operative signal 802. The signal cancelling unit 818 is configured to cancel the self-signal in the reduced-power signal provided to the information receiver 816.

Referring now to Fig. 9, apparatus for harvesting energy from SS 903 and CS 902 at a device in a Time Division Duplexing (TDD) mobile communication network is illustrated, according to an embodiment of the present invention. In a TDD system, each device is configured to transmit signals during a transmitting time slot allocated to the device, and to receive signals during a receiving time slot allocated to the device. In the present embodiment the apparatus is embodied in a mobile device, but in other embodiments the apparatus may be embodied in an access point or other device.

The apparatus 910 includes many similar elements to the apparatus illustrated in Figs. 2, 7 and 8, and a detailed description will not be repeated here. For example, the apparatus 910 comprises a transmit antenna 911, receive antenna 912, coupling component 904 which could be fixed or reconfigurable, energy harvesting unit 913, energy storage unit 914, information transmitter 915, and an information receiver 916.

Additionally, the apparatus 910 comprises a switching unit 917 configured to connect the energy harvesting unit 913 to the receive antenna 912 during the transmitting time slot, to harvest energy from the self-signal 903 and co-operative signal 902 received via the receive antenna 912. During the transmitting time slot, the information receiver 916 can be deactivated and disconnected from the receive antenna 912 by the switching unit 917. During the receiving time slot, the switching unit 917 is configured to connect the receive antenna 912 to the information receiver 916 to enable signals from the wireless communications network to be received and decoded.

The receive antenna 912 and transmit antenna 911 can be combined as a single physical antenna for both receive and transmit use. In this case a coupling component 904 (e.g. a circulator) would be used to separate transmit and receive signals.

In some TDD embodiments of the present invention, the energy harvesting unit can be disconnected from the receive antenna and deactivated during the receiving time slot. Alternatively, in other TDD embodiments of the present invention the energy harvesting unit and information receiver can be connected by a reconfigurable power splitter such as the one shown in Fig. 2, instead of a switching unit. During the transmitting time period the reconfigurable power splitter can be controlled to set u equal to 1, so that all received power is directed to the energy harvesting unit. During the receiving time period the reconfigurable power splitter can be controlled to set µ equal to an intermediate value between 0 and 1, so that a portion of the received power can be used for information recovery and the remaining portion used for energy harvesting, as described above.

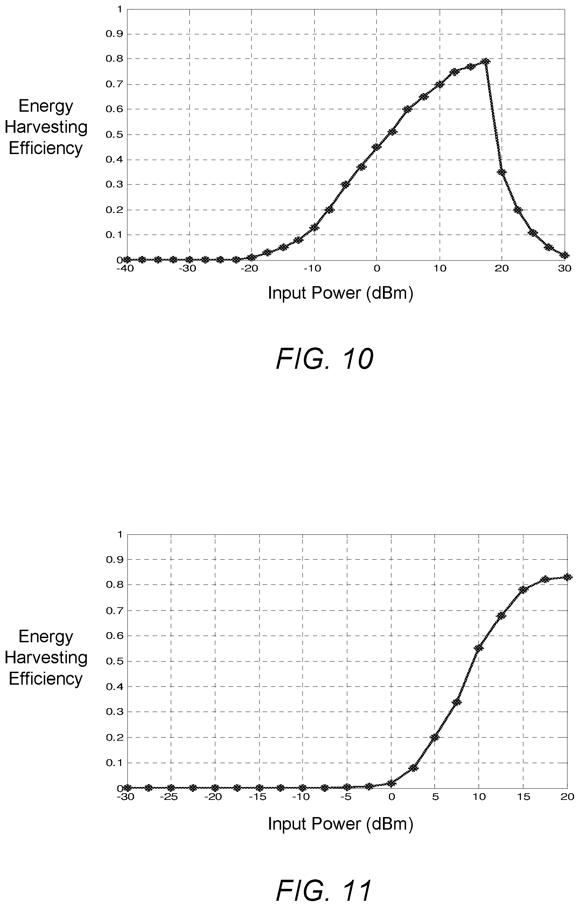

Finally, Figs. 10 and 11 illustrate the energy harvesting efficiency of first and second rectifiers respectively, according to embodiments of the present invention. The first rectifier is described in detail in "Harvesting Wireless Power: Survey of Energy-Harvester Conversion Efficiency in Far-Field, Wireless Power Transfer Systems", C. R. Valenta and G. D. Durgin, IEEE Microwave Magazine, Vol. 15, No. 4, pp. 108-120, June 2014. The second rectifier is described in detail in "A high-efficiency dual-frequency rectenna for 2.45 and 5.8 GHz wireless power transmission", Y. Suh and K. Chang, IEEE Trans. Microwave theory and techniques, Vol. 50, No. 7, July 2002.

As shown in Fig. 10, the energy harvesting efficiency when the first rectifier is used peaks around an input power level of 17 dBm. As shown in Fig. 11 the energy harvesting efficiency when the second rectifier is used peaks around an input power level of 20 dBm. When a reconfigurable power splitter is provided, a controller can adjust the ratio µ of the power splitter as required in order to maintain peak energy harvesting efficiency.

Whilst certain embodiments of the invention have been described herein with reference to the drawings, it will be understood that many variations and modifications will be possible without departing from the scope of the invention as defined in the accompanying claims.

## Claims

1. Apparatus for transmitting and receiving signals in a wireless communication network, the apparatus comprising:
a transmit antenna (121; 211; 711; 811; 911) configured to transmit signals to the wireless communication network; and
a receive antenna (122; 212; 712; 812; 912) configured to receive signals from the wireless communication network;
**characterised in that** the apparatus is configured to operate in a Frequency Division Duplexing mode in which the transmit antenna is configured to transmit signals at a first frequency and the receive antenna is configured to receive signals at a second frequency different to the first frequency, and the apparatus comprises:
an energy harvesting unit (213; 713a, 713b; 813; 913) configured to harvest electrical energy from a self-signal transmitted by the transmit antenna and received at the receive antenna; and
a filter (217) configured to receive an input signal from the receive antenna and separate the input signal into a first filtered signal having the first frequency and a second filtered signal having the second frequency, such that the first filtered signal includes the self-signal transmitted at the first frequency by the transmit antenna,
wherein the energy harvesting unit is configured to receive the first filtered signal from the filter and harvest the electrical energy from the first filtered signal.

2. The apparatus of claim 1, further comprising:
a power splitter configured to receive an input signal from the receive antenna and divide the received signal into first and second output signals; and
an information receiver configured to receive the first output signal from the power divider and to process the first output signal to extract information,
wherein the energy harvesting unit is configured to receive the second output signal from the power splitter and harvest the electrical energy from the second output signal.

3. The apparatus of claim 2, further comprising:
a power splitter controller configured to control the power splitter to adjust a ratio of signal powers between the first and second output signals.

4. The apparatus of claim 3, wherein the power splitter controller is configured to adjust the ratio of signal powers to provide a target power level of the second output signal to the energy harvesting unit, and
wherein the target power level of the second output signal is a power level corresponding to an optimum operating efficiency of the energy harvesting unit.

5. The apparatus of any one of the preceding claims, wherein the apparatus is included in a mobile device for use in the wireless communication network or is included in a wireless access point configured to communicate with a plurality of devices in the wireless communication network, and/or
wherein the apparatus further comprises energy storage means for storing energy, wherein the energy harvesting unit is configured to store the harvested electrical energy in the energy storage means, and/or
wherein the transmit antenna and the receive antenna comprise the same physical antenna, and the apparatus further comprises a coupling mechanism configured to separate signals received and transmitted via said antenna, and/or
wherein the energy harvesting unit is further configured to harvest electrical energy from one or more other devices, in addition to harvesting electrical energy from the self-signal, and/or
wherein the apparatus further comprises an impedance matching mechanism controllable to match the impedance of the receive antenna and/or power splitter to the input impedance of the energy harvesting unit.

6. The apparatus of claim 5, wherein the apparatus comprises the coupling mechanism, and wherein the coupling mechanism is configurable to allow the ratio of the power of the self-signal to the power of the transmitted signal to be dynamically adjusted.

7. A method of harvesting energy at an apparatus in a wireless communication network, the apparatus including a transmit antenna (121; 211; 711; 811; 911) configured to transmit signals to the wireless communication network and a receive antenna (122; 212; 712; 812; 912) configured to receive signals from the wireless communication network, the method **characterised by:**
receiving an input signal from the receive antenna, while operating in a Frequency Division Duplexing mode in which the transmit antenna is configured to transmit signals at a first frequency and the receive antenna is configured to receive signals at a second frequency different to the first frequency;
separating the input signal into a first filtered signal having the first frequency and a second filtered signal having the second frequency, such that the first filtered signal includes a self-signal transmitted by the transmit antenna; and
harvesting electrical energy from the first filtered signal.

8. The method of claim 7, further comprising:
dividing an input signal from the receive antenna into first and second output signals; and
sending the first output signal to an information receiver configured to process the first output signal to extract information,
wherein the electrical energy is harvested from the second output signal.

9. The method of claim 8, further comprising:
adjusting a ratio of signal powers between the first and second output signals to provide a target power level of the second output signal,
wherein the target power level of the second output signal is a power level corresponding to an optimum operating efficiency of an energy harvesting unit used to harvest the electrical energy.

## Patentansprüche

1. Vorrichtung zum Senden und Empfangen von Signalen in einem drahtlosen Datenübertragungsnetzwerk, wobei die Vorrichtung umfasst:
eine Sendeantenne (121; 211; 711; 811; 911), die so konfiguriert wird, dass sie Signale an das drahtlose Datenübertragungsnetzwerk sendet; und
eine Empfangsantenne (122; 212; 712; 812; 912), die für den Empfang von Signalen aus dem drahtlosen Datenübertragungsnetzwerk konfiguriert wird;
**dadurch gekennzeichnet, dass** die Vorrichtung so konfiguriert wird, dass sie in einem Frequenzteilungs-Duplexmodus arbeitet, in dem die Sendeantenne so konfiguriert wird, dass sie Signale mit einer ersten Frequenz sendet und die Empfangsantenne so konfiguriert wird, dass sie Signale mit einer zweiten, von der ersten Frequenz verschiedenen Frequenz empfängt, und die Vorrichtung umfasst:
eine Energiegewinnungseinheit (213; 713a, 713b; 813; 913), die so konfiguriert wird, dass sie elektrische Energie aus einem von der Sendeantenne gesendeten und an der Empfangsantenne empfangenen Eigensignal gewinnt; und
ein Filter (217), das so konfiguriert wird, dass es ein Eingangssignal von der Empfangsantenne empfängt und das Eingangssignal in ein erstes gefiltertes Signal mit der ersten Frequenz und ein zweites gefiltertes Signal mit der zweiten Frequenz trennt, so dass das erste gefilterte Signal das von der Sendeantenne auf der ersten Frequenz gesendete Eigensignal enthält, wobei die Energiegewinnungseinheit so konfiguriert wird, dass sie das erste gefilterte Signal von dem Filter empfängt und die elektrische Energie aus dem ersten gefilterten Signal gewinnt.

2. Vorrichtung nach Anspruch 1, des Weiteren umfassend:
einen Leistungsteiler, der konfiguriert wird, um ein Eingangssignal von der Empfangsantenne zu empfangen und das empfangene Signal in ein erstes und ein zweites Ausgangssignal zu teilen; und
einen Informationsempfänger, der so konfiguriert wird, dass er das erste Ausgangssignal von dem Leistungsteiler empfängt und das erste Ausgangssignal verarbeitet, um Informationen zu extrahieren,
wobei die Energiegewinnungseinheit so konfiguriert wird, dass sie das zweite Ausgangssignal von dem Leistungsteiler empfängt und die elektrische Energie aus dem zweiten Ausgangssignal gewinnt.

3. Vorrichtung nach Anspruch 2, des Weiteren umfassend:
eine Leistungsteilersteuerung, die so konfiguriert wird, dass sie den Leistungsteiler steuert, um ein Verhältnis der Signalleistungen zwischen dem ersten und dem zweiten Ausgangssignal einzustellen.

4. Vorrichtung nach Anspruch 3, wobei die Leistungsteilersteuerung so konfiguriert wird, dass sie das Verhältnis der Signalleistungen einstellt, um einen Zielleistungspegel des zweiten Ausgangssignals an der Energiegewinnungseinheit bereitzustellen, und
wobei der Zielleistungspegel des zweiten Ausgangssignals ein Leistungspegel ist, der einem optimalen Betriebswirkungsgrad der Energiegewinnungseinheit entspricht.

5. Vorrichtung nach einem der vorhergehenden Ansprüche, wobei die Vorrichtung in einem mobilen Gerät zur Verwendung in dem drahtlosen Datenübertragungsnetzwerk enthalten ist oder in einem drahtlosen Zugangspunkt enthalten ist, der konfiguriert wird, um mit einer Vielzahl von Geräten in dem drahtlosen Datenübertragungsnetzwerk zu kommunizieren, und/oder
wobei die Vorrichtung ferner Energiespeichermittel zum Speichern von Energie umfasst, wobei die Energiegewinnungseinheit konfiguriert wird, um die gewonnene elektrische Energie in den Energiespeichermitteln zu speichern, und/oder
wobei die Sendeantenne und die Empfangsantenne dieselbe physikalische Antenne umfassen, und die Vorrichtung des Weiteren einen Kopplungsmechanismus umfasst, der so konfiguriert wird, dass er über die Antenne empfangene und gesendete Signale trennt, und/oder
wobei die Energiegewinnungseinheit des Weiteren so konfiguriert wird, dass sie zusätzlich zur Gewinnung elektrischer Energie aus dem Eigensignal elektrische Energie von einem oder mehreren anderen Geräten gewinnt, und/oder
wobei die Vorrichtung des Weiteren einen Impedanzanpassungsmechanismus umfasst, der so steuerbar ist, dass er die Impedanz der Empfangsantenne und/oder des Leistungsteilers an die Eingangsimpedanz der Energiegewinnungseinheit anpasst.

6. Vorrichtung nach Anspruch 5, wobei die Vorrichtung den Kopplungsmechanismus umfasst und wobei der Kopplungsmechanismus so konfigurierbar ist, dass das Verhältnis der Leistung des Eigensignals zu der Leistung des übertragenen Signals dynamisch angepassbar ist.

7. Verfahren zum Gewinnen von Energie an einer Vorrichtung in einem drahtlosen Datenübertragungsnetzwerk, wobei die Vorrichtung eine Sendeantenne (121; 211; 711; 811; 911), die konfiguriert wird, um Signale an das drahtlose Datenübertragungsnetzwerk zu senden, und eine Empfangsantenne (122; 212; 712; 812; 912) aufweist, die konfiguriert wird, um Signale von dem drahtlosen Datenübertragungsnetzwerk zu empfangen, wobei das Verfahren **gekennzeichnet wird durch:**
ein Empfangen eines Eingangssignals von der Empfangsantenne, während sie in einem Frequenzteilungs-Duplexmodus arbeitet, in dem die Sendeantenne konfiguriert wird, um Signale mit einer ersten Frequenz zu senden, und die Empfangsantenne konfiguriert ist, um Signale mit einer zweiten, von der ersten Frequenz verschiedenen Frequenz zu empfangen;
ein Trennen des Eingangssignals in ein erstes gefiltertes Signal mit der ersten Frequenz und ein zweites gefiltertes Signal mit der zweiten Frequenz, so dass das erste gefilterte Signal ein von der Sendeantenne übertragenes Eigensignal enthält; und
ein Gewinnen von elektrischer Energie aus dem ersten gefilterten Signal.

8. Verfahren nach Anspruch 7, des Weiteren umfassend:
ein Aufteilen eines Eingangssignals von der Empfangsantenne in ein erstes und ein zweites Ausgangssignal; und
ein Senden des ersten Ausgangssignals an einen Informationsempfänger, der konfiguriert wird, um das erste Ausgangssignal zu verarbeiten, um Informationen zu extrahieren,
wobei die elektrische Energie aus dem zweiten Ausgangssignal gewonnen wird.

9. Verfahren nach Anspruch 8, des Weiteren umfassend:
ein Einstellen eines Verhältnisses von Signalleistungen zwischen dem ersten und dem zweiten Ausgangssignal, um einen Zielleistungspegel des zweiten Ausgangssignals bereitzustellen,
wobei der Zielleistungspegel des zweiten Ausgangssignals ein Leistungspegel ist, der einem optimalen Betriebswirkungsgrad einer Energiegewinnungseinheit entspricht, die zum Gewinnen der elektrischen Energie verwendet wird.

## Revendications

1. Appareil pour la transmission et la réception de signaux dans un réseau de communications sans fil, l'appareil comprenant :
une antenne de transmission (121; 211; 711; 811; 911) configurée pour transmettre des signaux au réseau de communications sans fil ; et
une antenne de réception (122; 212; 712; 812; 912) configurée pour recevoir des signaux du réseau de communications sans fil ;
**caractérisé en ce que** l'appareil est configuré pour fonctionner dans un mode de duplexage en répartition de fréquence dans lequel l'antenne de transmission est configurée pour transmettre des signaux à une première fréquence, et l'antenne de réception est configurée pour recevoir des signaux à une deuxième fréquence différente de la première fréquence, et l'appareil comprenant :
une unité de récupération d'énergie (213; 713a, 713b; 813; 913) configurée pour récupérer de l'énergie électrique d'un auto-signal transmis par l'antenne de transmission et reçu à l'antenne de réception ; et
un filtre (217) configuré pour recevoir un signal d'entrée de l'antenne de réception et séparer le signal d'entrée en un premier signal filtré avec la première fréquence, et un deuxième signal filtré avec la deuxième fréquence, de sorte que le premier signal filtré comprenne l'auto-signal transmis à la première fréquence par l'antenne de transmission, l'unité de récupération d'énergie étant configurée pour recevoir le premier signal filtré du filtre et récupérer l'énergie électrique du premier signal filtré.

2. Appareil selon la revendication 1, comprenant en outre :
un répartiteur de puissance configuré pour recevoir un signal d'entrée de l'antenne de réception et diviser le signal reçu en premier et deuxième signaux de sortie ; et
un récepteur d'informations configuré pour recevoir le premier signal de sortie du répartiteur de puissance et traiter le premier signal de sortie pour extraire des informations, l'unité de récupération d'énergie étant configurée pour recevoir le deuxième signal de sortie du répartiteur de puissance et récupérer l'énergie électrique du deuxième signal de sortie.

3. Appareil selon la revendication 2, comprenant en outre :
un contrôleur de répartiteur de puissance configurée pour contrôler le répartiteur de puissance afin d'ajuster un ratio de puissances de signal entre les premier et deuxième signaux de sortie.

4. Appareil selon la revendication 3, le contrôleur de répartiteur de puissance étant configuré pour ajuster le ratio de puissances de signal afin de fournir un niveau de puissance cible du deuxième signal de sortie à l'unité de récupération d'énergie, et le niveau de puissance cible du deuxième signal de sortie étant un niveau de puissance correspondant à une efficacité opérationnelle optimale de l'unité de récupération d'énergie.

5. Appareil selon une quelconque des revendications précédentes, l'appareil étant incorporé dans un appareil mobile destiné à être utilisé dans le réseau de communication sans fil, ou étant incorporé dans un point d'accès sans fil configuré pour communiquer avec une pluralité de dispositifs dans le réseau de communication sans fil, et/ou l'appareil comprenant en outre un dispositif de stockage d'énergie pour le stockage d'énergie, l'unité de récupération d'énergie étant configurée pour stocker l'énergie électrique récupérée dans le dispositif de stockage d'énergie, et/ou l'antenne de transmission et l'antenne de réception comprenant la même antenne physique, et l'appareil comprenant en outre un mécanisme de couplage configuré pour séparer les signaux reçus et les signaux transmis via ladite antenne, et/ou l'unité de récupération d'énergie étant configurée en outre pour récupérer de l'énergie électrique d'un ou plusieurs autres dispositifs, en plus de la récupération d'énergie électrique de l'auto-signal, et/ou l'appareil comprenant en outre un mécanisme d'adaptation d'impédance contrôlable pour adapter l'impédance de l'antenne de réception et/ou du répartiteur de puissance à l'impédance d'entrée de l'unité de récupération d'énergie.

6. Appareil selon la revendication 5, l'appareil comprenant le mécanisme de couplage, et le mécanisme de couplage étant configurable pour permettre l'ajustage dynamique du ratio de la puissance de l'auto-signal sur la puissance du signal transmis.

7. Méthode de récupération d'énergie à un appareil dans un réseau de communication sans fil, l'appareil comprenant une antenne de transmission (121; 211; 711; 811; 911) configurée pour transmettre des signaux au réseau de communications sans fil, et une antenne de réception (122; 212; 712; 812; 912) configurée pour recevoir des signaux du réseau de communications sans fil, la méthode étant **caractérisée par** :
la réception d'un signal d'entrée de l'antenne de réception, lors de l'utilisation dans un mode de duplexage en répartition de fréquence dans lequel l'antenne de transmission est configurée pour transmettre des signaux à une première fréquence, et l'antenne de réception est configurée pour recevoir des signaux à une deuxième fréquence différente de la première fréquence ;
la séparation du signal d'entrée en un premier signal filtré avec la première fréquence, et un deuxième signal filtré avec la deuxième fréquence, de sorte que le premier signal filtré comprenne un auto-signal transmis par l'antenne de transmission ; et
la récupération d'énergie électrique du premier signal filtré.

8. Méthode selon la revendication 7, comprenant en outre :
la répartition d'un signal d'entrée provenant de l'antenne de réception en premier et deuxième signaux de sortie ; et
l'envoi du premier signal de sortie à un récepteur d'information configuré pour traiter le premier signal de sortie pour extraire des informations, l'énergie électrique étant récupérée du deuxième signal de sortie.

9. Méthode selon la revendication 8, comprenant en outre :
l'ajustage d'un ratio de puissances de signal entre les premier et deuxième signaux de sortie pour fournir un niveau de puissance cible du deuxième signal de sortie, le niveau de puissance cible du deuxième signal de sortie étant un deuxième signal de sortie étant un niveau de puissance correspondant à une efficacité opérationnelle optimale d'une unité de récupération d'énergie utilisée pour récupérer l'énergie électrique.
